# EUROPEAN PATENT SPECIFICATION

(11) **EP 1 940 079 B1**
(45) Date of publication and mention of the grant of the patent: **24.11.2010**
(21) Application number: 06790971.3
(22) Date of filing: 12.09.2006
(51) Int. Cl.: H04L 12/28

(54) **A COMMUNICATION DEVICE AND A SYSTEM FOR MANAGING THE LOCAL DEVIES REMOTELY AND THE METHOD THEREOF**
KOMMUNIKATIONSEINRICHTUNG UND SYSTEM ZUR VERWALTUNG DER LOKALEN EINRICHTUNGEN AUS DER FERNE UND VERFAHREN DAFÜR
PROCEDE ET SYSTEME DE GESTION DE RESEAUX LOCAUX A DISTANCE MOYENNANT UN DISPOSITIF DE COMMUNICATION

(30) Priority: 13.09.2005 CN 200510102699
(43) Date of publication of application: 02.07.2008
(73) Proprietor: Huawei Technologies Co., Ltd., Shenzhen, Guangdong Province 518129 (CN)
(72) Inventor: HU, Junling, Shenzhen, Guangdong Province 518129 (CN)
(74) Representative: Hengelhaupt, Jürgen
(86) International application number: PCT/CN2006/002357
(87) International publication number: WO 2007/031014

(56) References cited:
- CN-A- 1 310 906
- CN-A- 1 332 553
- KR-A- 20050 027 777
- US-A1- 2002 018 478
- US-A1- 2004 015 573
- US-B1- 6 230 194
- US-B1- 6 286 038

## Description

### Cross-reference to related applications

This application claims priority to Chinese Patent Application No. 200510102699.3, field sep. 13, 2005, entitled"Communication Device, system and Method for Managing Local Network Device Remotely", commonly assigned, incorporated by reference herein for all purposes.

### Field of the invention

The present invention relates to remote management technology, and more particularly, to a communication device, system and method for managing local network device remotely.

### Background of the invention

With the rapid development of the digital information technology, it has broken through the limit of the traditional commercial use and relates to the electronic productions of the consume field. The office device of enterprises has almost realized digitalization, and more and more digital devices centered on entertainment and digital household electrical appliance appear in family.

With the increase of all kinds of intelligent devices in enterprises or families, connecting, sharing or controlling needs to be implemented among each other. Thus, it is necessary that these devices are connected in a local area network of families or enterprises in wire or wireless manner, which is called the local network.

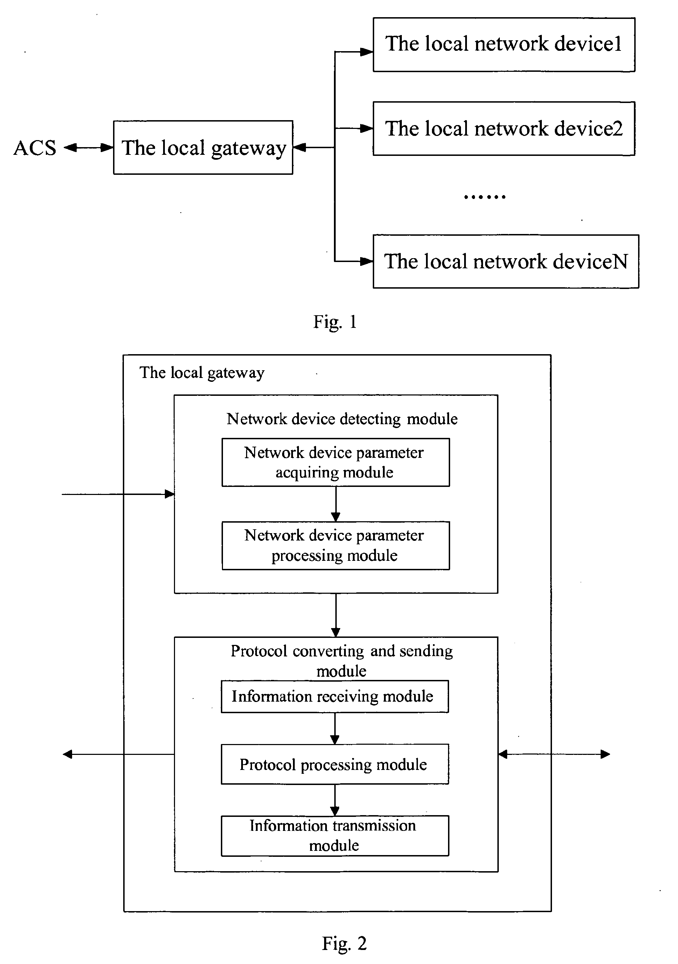

Figure 1 shows an organization network schematic diagram of a local network. The local network is organized based on the local gateway. The local gateway provides a uniform external interface for connecting internet and all the local devices intercommunicate with each other via the local gateway. Thus, the local gateway of the local network serves not only as a uniform external interface, but also as a hinge via which the local network devices intercommunicate with each other.

It is necessary for the network side to uniformly manage all the services such as service delivering, software upgrading, all kinds of Quality of Service (QoS), secure strategy configuring, and the like in the local network. In the condition of IPv4, most local terminals are allocated private network address because of lacking IP address resource. Many difficulties arise from the management of the private network by the network management system due to the need for the Network Address Transition (NAT ) traversal. In addition, some management strategies, such as QoS, need to be configured with the gateway associated with the terminals to get a good effect, thus the network management system needs to know the relationship between local gateway and the service terminal.

The special position of the local gateway in the network and the apperceive need of the network side for the relationship between the terminal and gateway make the uniform remote management of the terminal devices of the local network via the local gateway feasible and necessary.

The following technical solutions are implemented in the prior art in order to realize the management of the devices of the local network.

The international standard organization DSL forum defines TR-069 as Customer Premise Devices (CPE) remote management criterion. The criterion defines a device managed data model in oriented object manner and a corresponding Remote Procedure Call (RPC) method to operate the device. In this method, a device object may include a lot of sub-objects, such as a local gateway object may include Asymmetrical Digital Subscriber Line (ADSL) sub-object, Wireless Local Area Network (WLAN) sub-object, Voice over Internet Protocol (VoIP) sub-object and the like. Every class of the sub-objects may also include several embodiments.

The WT-111 of the DSL forum also provides its solution for the management of the other service terminals in the local network which aims at the following three kinds of cases.

(1) The gateway does not support TR069 and allocates a private network IP to the terminal (the gateway acts as the NAT device) ;

(2) The gateway supports TR069 and allocates a private network IP to the terminals (the gateway acts as the NAT device) ;

(3) The terminal is allocated with a public network IP (or the terminals intercommunicates with SP via a bridge or the gateway allocates the IP of the public network address pool to the terminals) and the gateway supports TR069.

The gateway needs to support TR069 in both case (2) and (3). In some application, Auto Configuration System (ACS) needs to know the relationship between the terminals and gateway in order to manage them based on the relationship. Therefore, the method defined in WT-111 is that the terminal and gateway find each other by Dynamic Host Configuration Protocol (DHCP) option, and record the device ID of the other. The terminals report the gateway information related to the terminals to ACS, meanwhile, ACS needs to send a message to the designated gateway to confirm the relationship.

The terminal is allocated with the private network IP addresses in case (1) and (2). WT-111 makes ACS to traverse NAT and send connection request to private network terminals via STUN (Simple Traversal of UDP (User Datagram Protocol) Through Network Address Translators) mechanism. The ACS needs to integrate STUN server and all the terminals support STUN mechanism.

As above, the prior art has the following defects:

1. All the local network terminals needing to be managed support the same protocol such as TR-069.

2. Each terminal is managed independently. Thus, there is no more proper configuration management of the terminals according to the whole circumstance of the enterprise network or the family network organization.

3. The gateway and the terminal report the related information to ACS, which results in information redundancy, and ACS needs to identify the consistency of the information, which wastes the disposal resources of the ACS.

4. It is necessary for the terminal to add the support of STUN due to the complication of processing the NAT Traversal problem. ACS needs to integrate STUN Server, which increases the complexity of the device and process procedure.

US 6,286,038 B1 discloses a method of remotely configuring a network device. The configuration information for the network, which includes a device configuration parameter, is generated at a remote center configuration server. In response to the receipt of identification information from the network device at the remote center configuration server, the configuration information is propagated to the network device.

US 6,230,194 B1 discloses a system for upgrading the software contents of a network interface device connecting a client computer system to an external network. Remote management server 206 interacts with gateway interface device 208 to provide configuration information and upgrade parameters required by the gateway interface device 208. This customer registration information is then stored in the remote management server after having been entered into the customer registration form step 908.

### Summary of the Invention

The present invention provides a communication device and a system and a method for managing local network device remotely. The uniform management of the local network terminals is realized via the local gateway, and the terminals of the local network don't need support the remote network management protocol. The remote management server can easily know the condition of the network organization of the whole local network, and configure the topology structure of the local network. The solution of the embodiments of the present invention can wipe off the related information redundancy between the gateway and terminal, reduce the cost of consistency management, and simplify the NAT traversal mechanism when the remote management server visits the private network terminal.

An embodiment of the present invention provides a method for managing local network device remotely, including:
acquiring information of a local network device by a local gateway; convert the information of the local network device into identifiable information to be identified by a remote management server; providing the identifiable information to a remote management server; receiving a configuration instruction generated by the remote management server based on the identifiable information of the local network device for managing the local network device by a local gateway; convert the configuration instruction into an identifiable configuration instruction to be identified by the local network device; and sending the identifiable configuration instruction to the local network device.

Acquiring information of each local network device may priorly include:
acquiring related information of the local network device, determining a topology structure and configuration information of the local network which are included in information of the local network device by processing the acquired related information.

Acquiring the related information of the local network device may priorly include:
acquiring, a terminal type, a connection status and a configurable or manageable data model of the local network device which have been on line; and/or acquiring, a terminal type, a connection status and a configurable or manageable data model of the local network device of which the configuration has changed; and/or acquiring, a terminal type, a connection status and a configurable or manageable data model of the local network device which attends the local network newly; and/or acquiring, a terminal type of the local network device which is off-line.

Determining a topology structure and a configuration information of the local network may priorly include:
acquiring, a suitable remote configuration management information as the configuration information from the related information of the local network device; and updating, the configuration model according to the information of the local network device and educing the topology structure of the local network, wherein the configuration instruction may prior be generated based on the topology structure and configuration information.

An embodiment of the present invention provides a system for managing local network device remotely, including:
a local gateway, configured to intercommunicate with at least one local network device, acquire information of a local network device, convert the information of the local network device into identifiable information to be identified by a remote management server and provide the identifiable information; a remote management server, configured to receive the identifiable information of the local network device, generate a configuration instruction for managing the local network device according to the identifiable information of network device and transmit the configuration instruction to the local gateway; and the local gateway, further configured to receive the configuration instruction, convert the configuration instruction into an identifiable configuration instruction to be identified by the local network device and transmit the identifiable configuration instruction to the local network device.

An embodiment of the present invention provides a local gateway for managing local network device remotely, including:
a network device detecting module, configured to acquire the information of the local network device; and
a protocol converting and sending module, configured to convert the information of the local network device into the identifiable information to be identified by the remote management server and transmit the identifiable information to the remote management server; receive aconfiguration instruction from the remote management server, convert the configuration instruction intoan identifiable configuration instruction to be identified by the local network device, and transmit the identifiable configuration instruction to the local network device.

The protocol converting and sending module specifically may priorly include:
an information receiving module configured to receive the configuration instruction from the remote management server and the information of the local network device detected by the network device detecting module and transmit the configuration instruction and the information of the local network device to a protocol processing module; the protocol processing module configured to convert the configuration instruction into the identifiable configuration instruction which can be identified by the local network device; and convert the information of the local network device into the identifiable information which can be identified by the remote management server; and an information transmission module configured to transmit the converted configuration instruction to the local network device to realize the management of each local network device, and transmit the converted information of the local network device to the remote management server.

The network device detecting module may priorly include:
a network device parameter acquiring module configured to acquire related information of the local network device including an information of access, remove, connection status and / or work status of the local network device; and a network device parameter processing module configured to determine a topology structure and configuration information of the local network according to the related information of the local network device acquired by the network device parameter acquiring module.

In accordance with the technology solutions provided by the embodiments of the present invention, the network device detecting module and the protocol converting and sending module are set in local gateway of the device and the system for managing local network devices remotely of the present invention. The remote management module is set in the remote management server. The method is to realize the external communication among the local internal network, the remote management server and the local gateway via the protocol converting and sending module in the local gateway. Thus the remote management module realizes managing the local network terminal via the local gateway, and it is unneeded that all the terminals of the local network support remote network management protocol. The remote management server can easily know the condition of the network organization of the whole local network and optimize the configuration based on the topology of the local network. The solution of the embodiments of the present invention can omit the related information redundancy of the gateway and terminal, reduce the consistency management spending, and meanwhile, simplify the NAT traversal mechanism when the remote management server visits the private network terminal.

### Brief description of the drawings

Figure 1 shows a schematic diagram illustrating an organization structure of the local network of the prior art;

Figure 2 shows a structure schematic diagram illustrating a communication device according to an embodiment of the present invention;

Figure 3 shows a first structure schematic diagram illustrating a system for managing the local network device remotely according to an embodiment of the present invention;

Figure 4 shows a structure schematic diagram illustrating a device detecting module for managing the local network device remotely according to an embodiment of the present invention;

Figure 5 shows a second structure schematic diagram illustrating a system for managing the local network device remotely according to an embodiment of the present invention;

Figure 6 shows a structure schematic diagram illustrating a protocol converting and sending module for managing the local network device remotely according to an embodiment of the present invention;

Figure 7 shows a flow chart illustrating a method for managing the local network device remotely according to an embodiment of the present invention; and

Figure 8 shows a processing procedure schematic diagram illustrating the method according to an embodiment of the present invention.

### Detailed description of the invention

In the embodiments of the present invention, mainly in the local network, the local gateway is used as a uniform management interface of the whole local network, namely, the local gateway is responsible for collecting the configuration information of the local network device, and transmitting the corresponding configuration information to the remote management server (such as automatic configuration system, namely ACS, etc.) uniformly, which enables the remote management server to perform the configuration management of the local network device properly.

Moreover, in the process of managing the local network device by the remote management server, the remote management server operates and manages the local network device as some sub-characters of the local gateway, namely, each local network device and other built-in set characters of the local gateway are in the same position to be managed. The only difference is the different local gateway interfaces, namely, a built-in device intercommunicates with the local gateway via an internal bus interface, and the local network device intercommunicates with the local gateway via wire or wireless network interface.

Firstly, an embodiment of the present invention provides a communication device, which may be used as the gateway device of the local network, namely the local gateway, and the local gateway intercommunicates with the local network device. The structure of the communication device as shown in Figure 2 specifically includes a network device detecting module and a protocol converting and sending module.

(1)Network device detecting module

The module is configured to acquire the configuration information of the local network device and the topology structure information of the local network, the network device detecting module may specifically include a network device parameter acquiring module and a network device parameter processing module.

The network device parameter acquiring module is configured to acquire the information of the local network device, including the information of access, remove, connection status and / or work status of the local network device.

The network device parameter processing module is configured to determine the topology structure and the configuration information of the local network according to the local network device information acquired by the network device parameter acquiring module.

(2)Protocol converting and sending module

In one embodiment of the present invention, in order to solve the information intercommunication problem when the local network device and the remote management server use different processing protocols, the communication device further includes the protocol converting and sending module. The acquired management information of the remote management server to the local network device can be converted to the identifiable configuration instruction which can be identified by the local network device and the instruction can be transmitted to each local network device via the protocol converting and sending module. The protocol converting and sending module is also configured to convert the configuration information of the local network device which needs to be provided to the remote management module into the identifiable configuration information which can be identified by the remote management server, and send the identifiable configuration information to the remote management server.

Moreover, the protocol converting and sending module may specifically include an information receiving module, a protocol processing module and an information transmission module.

The information receiving module is configured to receive the management information of the remote management server to each network device and the configuration information of each local network device detected by the network device detecting module, and transmit the management information and the configuration information of each local network device to the protocol processing module.

The protocol processing module is configured to convert the management information into the identifiable configuration instruction which can be identified by each local network device, and convert the configuration information of each local network device into the identifiable configuration information which can be identified by the remote management server.

The information transmission module is configured to transmit the configuration instruction to each local network device to realize the management of each local network device, and transmit the converted configuration information of each local network device to the remote management server.

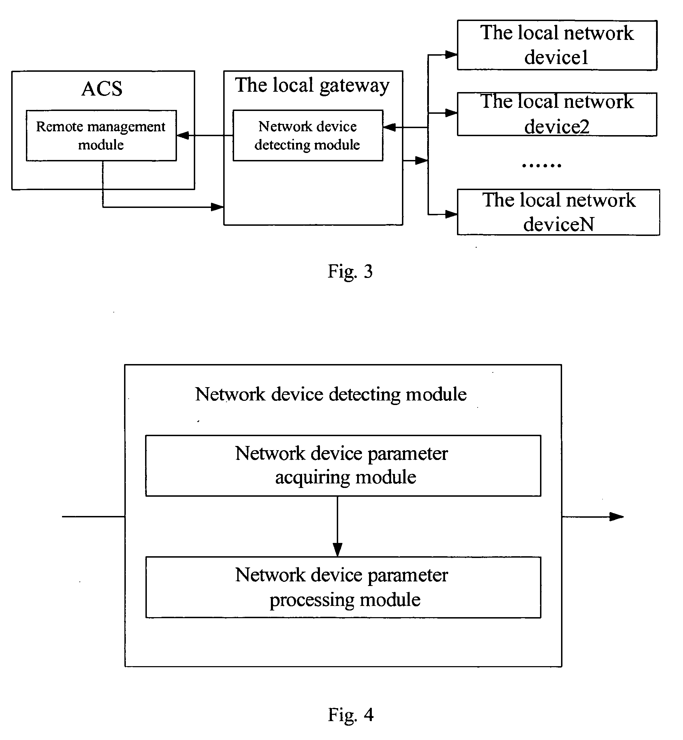

As shown in Figure 3, it is an embodiment of the system for managing the local network device remotely provided by the present invention.

The system includes a remote management server, a local gateway, and a local network device intercommunicating with the local gateway. A network device detecting module and a protocol converting and sending module are set in the local gateway. A remote management module is set in the remote management server.

(1)The network device detecting module is configured to detect the topology structure of the local network and acquire the configuration information of the local network device.

As shown in Figure 4, it is the specific structure of the network device detecting module which may include a network device parameter acquiring module and a network device parameter processing module.

The network device parameter acquiring module is configured to acquire the information of the local network device including the information of access, remove, connection status and / or work status of the local network device.

The network device parameter processing module is configured to acquire the topology structure and the configuration information of the local network device according to the local network device information acquired by the network device parameter acquiring module. Namely, the module may conveniently determine the topology structure of local network and the configuration information of the local network device according to the information of access, remove, the connection status, and / or work status of the local network device.

(2)The protocol converting and sending module

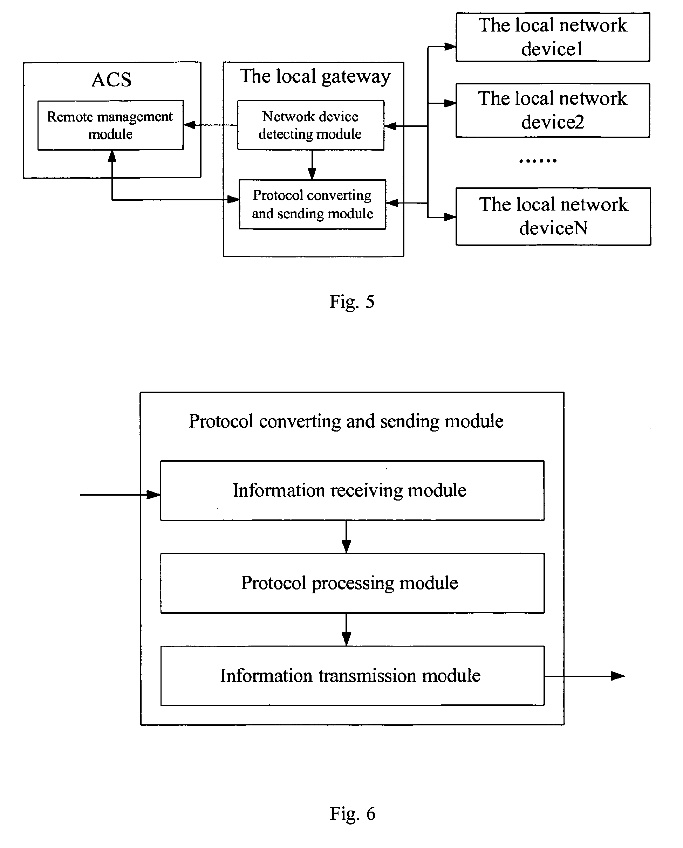

The system shown in Figure 5 includes the protocol converting and sending module which is set in the local gateway. The protocol converting and sending module is configured to convert the management information of the remote management server to each local network device into the identifiable configuration instruction which can be identified by the local network device, and transmit the identifiable configuration instruction to each local network device. At the same time, the module is also configured to convert the configuration information of each local network device and the topology structure information of the local network into the identifiable configuration information and the identifiable topology structure information of the local network which can be identified by the remote management server, and send the identifiable configuration information and the identifiable topology structure information to the corresponding remote management server, so that the remote management server can manage the local network device according to the corresponding configuration information.

As shown in Figure 6, it is the specific structure of the protocol converting and sending module. The protocol converting and sending module includes an information receiving module, a protocol processing module and an information transmission module.

The information receiving module is configured to receive the management information of the remote management server to each network device, the configuration information of each local network device detected by the network device detecting module and the topology structure information of the local network, and transmit the management information, the configuration information and the topology structure information to the protocol processing module.

The protocol processing module is configured to convert the management information into the identifiable configuration instruction which can be identified by each local network device, and convert the configuration information of each local network device and the topology structure information of the local network into the identifiable configuration information and the identifiable topology structure information of the local network which can be identified by the remote management server.

The information transmission module is configured to transmit the configuration instruction to each local network device to realize the management of each local network device, and transmit the converted configuration information of the local network device and the converted topology structure information of the local network to the remote management server.

(3) The remote management module manages the local network device according to the topology structure information of the local network detected by the device detecting module and the corresponding configuration information of the local network device.

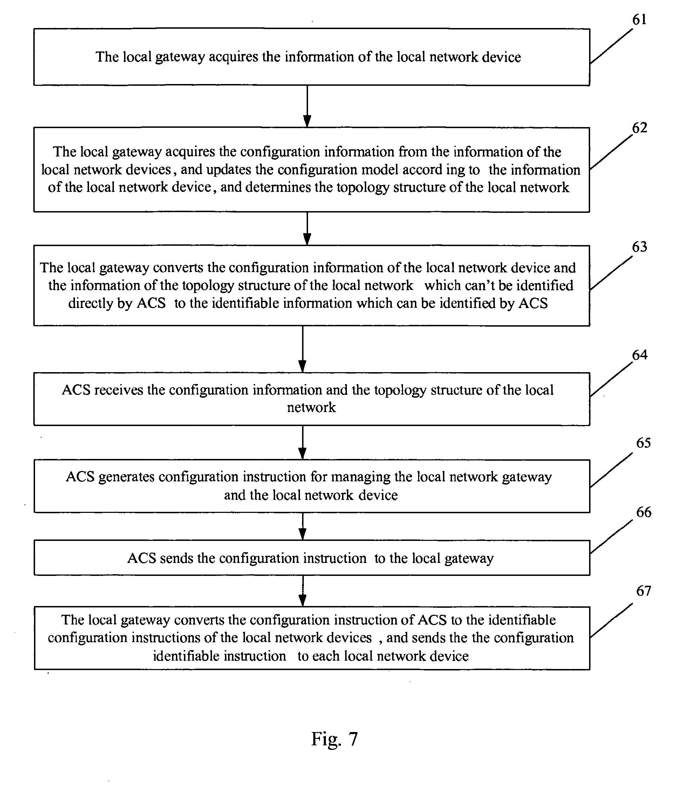

As shown in Figure 7, the specific processing procedure of the method for managing the local network device remotely may include the following steps:

Step 61: The local gateway acquires the terminal type, the connection status of the local network device and the information of the configurable and manageable data model.

Step 62: The local gateway acquires the information suitable for remote configuration management as the configuration information from the information of the local network device, and meanwhile updates the configuration model according to the information of the local network device and educes the topology structure information of the local network.

There are different manners for modifying the configuration model because of the different working statuses of the local network device. And the working status and the manners for modifying the configuration model are as follows:

1. The configuration model doesn't need to be operated, if the local network device is on line all along.

2. The configuration model is modified accordingly, if the configuration of the local network device has changed and the local network device is on line.

3. The corresponding configuration object is added to the configuration model, if there is the local network device which attends the domain of the local gateway and is on line.

4. The corresponding configuration object in the configuration model is deleted, if the power supply of the local network device is off or the local network device leaves the local gateway because the malfunction occurred.

Step63 : The local gateway converts the configuration information of the local network device and the information of the topology structure of the local network to the identifiable information which can be identified by the remote management server, and the information can't be identified directly by the remote management server.

Namely, the configuration information of the local network device and the topology structure information of the local network are borne in the identifiable massage which can be identified by the remote management server. The identifiable massage is sent to the remote management server so that the remote management server can acquire the corresponding information and manage the local network according to the corresponding information.

Step 64: The remote management server receives the conversed information and acquires the corresponding configuration information of the local network device and the topology structure information of the local network.

Step 65: The remote management server generates the configuration instruction for managing the local network gateway and the local network device.

The configuration instruction for managing the local network gateway and the local network device which is generated by the remote management server may be based on the received configuration information of the local network device and the topology structure of the local network, or may be the configuration instruction to the local network gateway and the local network device initiated by the remote management server.

Step 66: The remote management server sends the configuration instruction to the local gateway.

Step 67: The local gateway converts the configuration instruction of the remote management server to the identifiable configuration instruction which can be identified by each local network device, and sends the identifiable configuration instruction to each local network device. Thus the remote management of the local network device is realized.

The remote network management protocol of remote management server to the local gateway can be TR-069 in the embodiments of the present invention, but other remote network management protocols aren't excluded, such as Simple Network Management Protocol (SNMP) and the like. And the interior management protocol of the local network may be DHCP and Universal Plug and Play Agreement (UPnP) in the embodiments of the present invention, but other interior management protocols of the local network aren't excluded, such as the mechanism defined by Intelligent Grouping and Resource Sharing (IGRS).

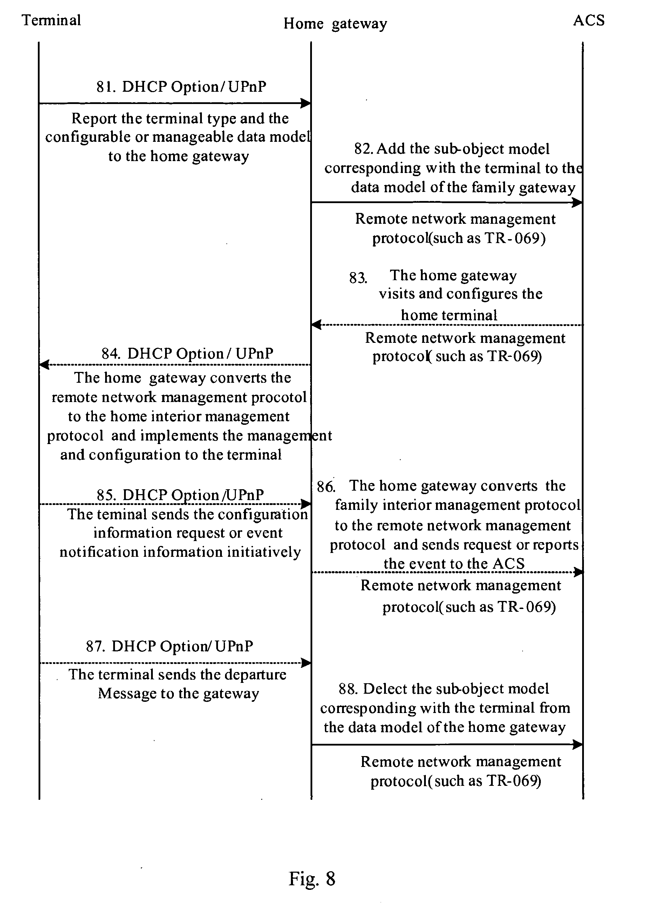

The processing procedure of the method is illustrated with an application example here. As shown in Figure 8, the corresponding processing procedure includes the following steps.

Step 81: The local network device (namely terminal) reports the type of the terminal and the configurable or manageable data model information to the home gateway which serves as a local gateway.

Step 82: The home gateway filters the configuration data model reported by the terminal in order to extract some part of the configuration manageable data model suitable for remote management from the configuration data model, adds new configuration object (namely sub-object model) to the configuration data model which is preserved by the home gateway, and reports the new added sub-objects model (namely configuration object model) to the remote management server.

Step 83: The remote management server may manage the terminal in the domain of the home gateway the same way as the built-in device of the home gateway after the remote management server receives the configuration object model. Namely, when the terminal needs the configuration management, the remote management server can take the initiative to launch the configuration management of the terminal to the home gateway which can be realized through the remote network management protocol such as TR-069.

Step 84: The home gateway converses the address and the management protocol according to the configuration object in order to converse the corresponding configuration management information into the message which can be identified by the terminal, if the object which the remote management server visits is the terminal in the domain of the home gateway after receives the management information, after the home gateway converses the address and the management protocol, the configuration management of the home terminals can be implemented by the home interior management protocol.

Step 85: The terminal sends configuration information request or the event notification message to the home gateway initiatively when the configuration of the terminal changes or the terminal requested to be configured initiatively.

Step 86: The home gateway converses the address and the management protocol after receiving the message, and notifies the remote management server of the corresponding information so that the remote management server may manage of the terminal accurately in real-time according to the corresponding configuration request or the event reported.

Step 87: The terminal sends the departure message to the home gateway when the power of the terminal is cut off or the terminal is off-line.

Step 88: The home gateway notifies the remote management server to delete the object model in the configuration data model after the home gateway automatically detects the departure message by regular handshake mechanism or other mechanisms.

To sum up, the system for managing the local network device remotely and the corresponding method of the embodiments of the present invention have the following advantages in the specific application:

1. The local network terminal which needs the remote management does not need to support the remote management protocol.

2. The remote management server can know the condition of the network organization of the whole local network conveniently and performs more reasonable configuration management according to the topology of the local network.

3. The local gateway uniformly reports the related information between the gateway and terminal, which wipes off the information redundancy and reduces cost of the consistency management.

4. The local gateway can perform the network address conversion according to the sub-object identification of the configuration management, which simplifies the visit mechanism in which the remote management server visits the private network terminal.

5. The prior remote network management protocol can only manage various characters integrated in the same device. The remote network management server can uniformly manage the local network terminal set in the home gateway or the local network terminal in the domain of the home gateway via the local gateway by the method of adding and deleting the configuration management sub-object dynamically which is raised by the embodiments of the present invention. According to the network system, the different terminals are the different sub-characters of the gateway.

Though illustration and description of the present disclosure have been given with reference to embodiments, which are defined by the appended claims.

## Claims

1. A method for managing local network device remotely, comprising:
acquiring information of a local network device by a local gateway;
convert the information of the local network device into identifiable information to be identified by a remote management server;
providing the identifiable information to the remote management server;
receiving a configuration instruction generated by the remote management server based on the identifiable information of the local network device for managing the local network device by the local gateway;
convert the configuration instruction into an identifiable configuration instruction to be identified by the local network device; and
sending the identifiable configuration instruction to the local network device.

2. The method according to claim 1, wherein the acquiring information of a local network device comprises:
acquiring related information of the local network device,
determining a topology structure and configuration information of the local network which are included in information of the local network device by processing the acquired related information.

3. The method according to claim 2, wherein the acquiring the related information of the local network device comprises:
acquiring, a terminal type, a connection status and a configurable or manageable data model of the local network device which have been on line; and/or
acquiring, a terminal type, a connection status and a configurable or manageable data model of the local network device of which the configuration has changed; and/or
acquiring, a terminal type, a connection status and a configurable or manageable data model of the local network device which attends the local network newly; and/or
acquiring, a terminal type of the local network device which is off-line.

4. The method according to claim 2, wherein the determining a topology structure and a configuration information of the local network comprises:
acquiring, a suitable remote configuration management information as the configuration information from the related information of the local network device; and
updating, the configuration model according to the information of the local network device and educing the topology structure of the local network.

5. The method according to claim 2, 3 or 4, wherein, the configuration instruction is generated based on the topology structure and configuration information.

6. A local gateway, for intercommunicating with at least one local network device, comprising:
a network device detecting module, configured to acquire the information of the local network device; and
a protocol converting and sending module, configured to convert the information of the local network device into the identifiable information to be identified by a remote management server and transmit the identifiable information to the remote management server; the protocol converting and sending module is further adapted to receive a configuration instruction generated by the remote management server based on the identifiable information of the local network device for managing the local network device; convert the configuration instruction into the identifiable configuration instruction to be identified by the local network device, and transmit the identifiable configuration instruction to the local network device.

7. The local gateway of claim 6, wherein the protocol converting and sending module comprises:
an information receiving module configured to receive the configuration instruction from the remote management server and the information of the local network device detected by the network device detecting module and transmit the configuration instruction and the information of the local network device to a protocol processing module;
the protocol processing module configured to convert the configuration instruction into the identifiable configuration instruction which can be identified by the local network device; and convert the information of the local network device into the identifiable information which can be identified by the remote management server; and
an information transmission module configured to transmit the converted configuration instruction to the local network device to realize the management of each local network device, and transmit the converted information of the local network device to the remote management server.

8. The local gateway according to claim 6 or 7, wherein the network device detecting module comprises:
a network device parameter acquiring module configured to acquire related information of the local network device including an information of access, remove, connection status and / or work status of the local network device; and
a network device parameter processing module configured to determine a topology structure and configuration information of the local network according to the related information of the local network device acquired by the network device parameter acquiring module.

9. A system for managing local network device, comprising:
a local gateway according to one of claims 6 to 8; and
a remote management server, configured to receive the identifiable information of the local network device, generate the configuration instruction for managing the local network device according to the identifiable information of network device and transmit the configuration instruction to the local gateway.

## Patentansprüche

1. Verfahren zur Verwaltung einer lokalen Netzwerkeinrichtung aus der Ferne, mit den folgenden Schritten:
Beschaffen von Informationen einer lokalen Netzwerkeinrichtung durch ein lokales Gateway;
Umsetzen der Informationen der lokalen Netzwerkeinrichtung in durch einen Femverwaltungsserver zu identifizierende identifizierbare Informationen;
Leiten der identifizierbaren Informationen zu dem Femverwaltungsserver;
Empfangen einer durch den Femverwaltungsserver erzeugten Konfigurationsanweisung auf der Basis der identifizierbaren Informationen der lokalen Netzwerkeinrichtung zur Verwaltung der lokalen Netzwerkeinrichtung durch das lokale Gateway;
Umsetzen der Konfigurationsanweisung in eine durch die lokale Netzwerkeinrichtung zu identifizierende identifizierbare Konfigurationsanweisung; und
Senden der identifizierbaren Konfigurationsanweisung zu der lokalen Netzwerkeinrichtung.

2. Verfahren nach Anspruch 1, wobei das Beschaffen von Informationen einer lokalen Netzwerkeinrichtung Folgendes umfasst:
Beschaffen von betreffenden Informationen der lokalen Netzwerkeinrichtung, Bestimmen einer Topologiestruktur und von Konfigurationsinformationen des lokalen Netzwerks, die in Informationen der lokalen Netzwerkeinrichtung enthalten sind, durch Verarbeiten der beschafften betreffenden Informationen.

3. Verfahren nach Anspruch 2, wobei das Beschaffen der betreffenden Informationen der lokalen Netzwerkeinrichtung Folgendes umfasst:
Beschaffen eines Endgerätetyps, eines Verbindungsstatus und eines konfigurierbaren oder verwaltbaren Datenmodells der lokalen Netzwerkeinrichtung, die online waren; und/oder
Beschaffen eines Endgerätetyps, eines Verbindungsstatus und eines konfigurierbaren oder verwaltbaren Datenmodells der lokalen Netzwerkeinrichtung, deren Konfiguration sich geändert hat; und/oder
Beschaffen eines Endgerätetyps, eines Verbindungsstatus und eines konfigurierbaren oder verwaltbaren Datenmodells der lokalen Netzwerkeinrichtung, die sich dem lokalen Netzwerk neu anschließt; und/oder
Beschaffen eines Endgerätetyps der lokalen Netzwerkeinrichtung, die offline ist.

4. Verfahren nach Anspruch 2, wobei das Bestimmen einer Topologiestruktur und einer Konfigurationsinformation des lokalen Netzwerks Folgendes umfasst:
Beschaffen einer geeigneten Fernkonfigurations-Verwaltungsinformation als die konfigurierbare Information aus den betreffenden Informationen der lokalen Netzwerkeinrichtung; und
Aktualisieren des Konfigurationsmodells gemäß den Informationen der lokalen Netzwerkeinrichtung und Deduzieren der Topologiestruktur des lokalen Netzwerks.

5. Verfahren nach Anspruch 2, 3 oder 4, wobei die Konfigurationsanweisung auf der Basis der Topologiestruktur und Konfigurationsinformation erzeugt wird.

6. Lokales Gateway zur Wechselkommunikation mit mindestens einer lokalen Netzwerkeinrichtung, umfassend:
ein Netzwerkeinrichtungs-Detektionsmodul, das dafür ausgelegt ist, die Informationen der lokalen Netzwerkeinrichtung zu beschaffen; und
ein Protokollumsetzungs- und Sendemodul, das dafür ausgelegt ist, die Informationen der lokalen Netzwerkeinrichtung in die durch einen Fernverwaltungsserver zu identifizierenden identifizierbaren Informationen umzusetzen und die identifizierbaren Informationen zu dem Fernverwaltungsserver zu senden; wobei das Protokollumsetzungs- und Sendemodul ferner dafür ausgelegt ist, eine durch den Fernverwaltungsserver auf der Basis der identifizierbaren Informationen der lokalen Netzwerkeinrichtung zur Verwaltung der lokalen Netzwerkeinrichtung erzeugte Konfigurationsanweisung zu empfangen, die Konfigurationsanweisung in die durch die lokale Netzwerkeinrichtung zu identifizierende identifizierbare Konfigurationsanweisung umzusetzen und die identifizierbare Konfigurationsanweisung zu der lokalen Netzwerkeinrichtung zu senden.

7. Lokales Gateway nach Anspruch 6, wobei das Protokollumsetzungs- und Sendemodul Folgendes umfasst:
ein Informationsempfangsmodul, das dafür ausgelegt ist, die Konfigurationsanweisung von dem Fernverwaltungsserver und die durch das Netzwerkeinrichtungs-Detektionsmodul detektierten Informationen der lokalen Netzwerkeinrichtung zu empfangen und die Konfigurationsanweisung und die Informationen der lokalen Netzwerkeinrichtung zu einem Protokollverarbeitungsmodul zu senden;
das Protokollverarbeitungsmodul, das dafür ausgelegt ist, die Konfigurationsanweisung in die identifizierbare Konfigurationsanweisung umzusetzen, die durch die lokale Netzwerkeinrichtung identifiziert werden kann; und die Informationen der lokalen Netzwerkeinrichtung in die identifizierbaren Informationen umzusetzen, die durch den Femverwaltungsserver identifiziert werden können; und
ein Informationsübertragungsmodul, das dafür ausgelegt ist, die umgesetzten Konfigurationsinformationen zu der lokalen Netzwerkeinrichtung zu senden, um die Verwaltung jeder lokalen Netzwerkeinrichtung zu realisieren, und die umgesetzten Informationen der lokalen Netzwerkeinrichtung zu dem Femverwaltungsserver zu senden.

8. Lokales Gatesway nach Anspruch 6 oder 7, wobei das Netzwerkeinrichtungs-Detektionsmodul Folgendes umfasst:
ein Netzwerkeinrichtungs-Parameterbeschaffungsmodul, das dafür ausgelegt ist, betreffende Informationen der lokalen Netzwerkeinrichtung zu beschaffen, einschließlich einer Zugangsinformation, des Entfemungs-, Verbindungsstatus und/oder Arbeitsstatus der lokalen Netzwerkeinrichtung; und
ein Netzwerkeinrichtungs-Parameterverarbeitungsmodul, das dafür ausgelegt ist, gemäß den durch das Netzwerkeinrichtungs-Parameterbeschaffungsmodul beschafften betreffenden Informationen der lokalen Netzwerkeinrichtung eine Topologiestruktur und Konfigurationsinformationen des lokalen Netzwerks zu bestimmen.

9. System zur Verwaltung einer lokalen Netzwerkeinrichtung, umfassend:
ein lokales Gateway nach einem der Ansprüche 6 bis 8; und
einen Femverwaltungsserver, der dafür ausgelegt ist, die identifizierbaren Informationen der lokalen Netzwerkeinrichtung zu empfangen, die Konfigurationsanweisung zur Verwaltung der lokalen Netzwerkeinrichtung gemäß den identifizierbaren Informationen der Netzwerkeinrichtung zu erzeugen und die Konfigurationsanweisung zu dem lokalen Gateway zu senden.

## Revendications

1. Procédé de gestion à distance d'un dispositif de réseau local, comprenant :
l'acquisition d'informations d'un dispositif de réseau local par une passerelle locale ;
la conversion des informations du dispositif de réseau local en informations identifiables destinées à être identifiées par un serveur de gestion à distance ;
la fourniture des informations identifiables au serveur de gestion à distance ;
la réception par la passerelle locale d'une instruction de configuration générée par le serveur de gestion à distance en fonction des informations identifiables du dispositif de réseau local pour gérer le dispositif de réseau local ;
la conversion de l'instruction de configuration en une instruction de configuration identifiable destinée à être identifiée par le dispositif de réseau local ; et
l'envoi de l'instruction de configuration identifiable au dispositif de réseau local.

2. Procédé selon la revendication 1, dans lequel l'acquisition d'informations d'un dispositif de réseau local comprend :
l'acquisition d'informations associées du dispositif de réseau local,
la détermination d'une structure topologique et d'informations de configuration du réseau local qui sont incluses dans les informations du dispositif de réseau local en traitant les informations associées acquises.

3. Procédé selon la revendication 2, dans lequel l'acquisition des informations associées du dispositif de réseau local comprend :
l'acquisition d'un type de terminal, d'un statut de connexion et d'un modèle de données configurable ou gérable du dispositif de réseau local qui ont été en ligne ; et/ou
l'acquisition d'un type de terminal, d'un statut de connexion et d'un modèle de données configurable ou gérable du dispositif de réseau local dont la configuration a changé ; et/ou
l'acquisition, d'un type de terminal, d'un statut de connexion et d'un modèle de données configurable ou gérable du dispositif de réseau local qui se trouve nouvellement dans le réseau local ; et/ou
l'acquisition d'un type de terminal du dispositif de réseau local qui est hors ligne.

4. Procédé selon la revendication 2, dans lequel la détermination d'une structure topologique et d'une information de configuration du réseau local comprend :
l'acquisition d'une information de gestion de configuration à distance convenable comme information de configuration à partir des informations associées du dispositif de réseau local ; et
l'actualisation du modèle de configuration en fonction des informations du dispositif de réseau local et l'extraction de la structure topologique du réseau local.

5. Procédé selon la revendication 2, 3 ou 4, dans lequel l'instruction de configuration est générée en fonction de la structure topologique et des informations de configuration.

6. Passerelle locale, destinée à intercommuniquer avec au moins un dispositif de réseau local, comprenant :
un module de détection de dispositif de réseau, configuré pour acquérir les informations du dispositif de réseau local ; et
un module de conversion de protocole et d'envoi, configuré pour convertir les informations du dispositif de réseau local en informations identifiables destinées à être identifiées par un serveur de gestion à distance et transmettre les informations identifiables au serveur de gestion à distance ; le module de conversion de protocole et d'envoi est adapté en outre pour recevoir une instruction de configuration générée par le serveur de gestion à distance en fonction des informations identifiables du dispositif de réseau local pour gérer le dispositif de réseau local, convertir l'instruction de configuration en l'instruction de configuration identifiable destinée à être identifiée par le dispositif de réseau local, et transmettre l'instruction de configuration identifiable au dispositif de réseau local.

7. Passerelle locale selon la revendication 6, dans laquelle le module de conversion de protocole et d'envoi comprend :
un module de réception d'informations configuré pour recevoir l'instruction de configuration du serveur de gestion à distance et les informations du dispositif de réseau local détectées par le module de détection de dispositif de réseau et transmettre l'instruction de configuration et les informations du dispositif de réseau local à un module de traitement de protocole ;
le module de traitement de protocole étant configuré pour convertir l'instruction de configuration en l'instruction de configuration identifiable qui peut être identifiée par le dispositif de réseau local ; et convertir les informations du dispositif de réseau local en les informations identifiables qui peuvent être identifiées par le serveur de gestion à distance ; et
un module de transmission d'informations, configuré pour transmettre l'instruction de configuration convertie au dispositif de réseau local afin de réaliser la gestion de chaque dispositif de réseau local, et transmettre les informations converties du dispositif de réseau local au serveur de gestion à distance.

8. Passerelle locale selon la revendication 6 ou 7, dans laquelle le module de détection de dispositif de réseau comprend :
un module d'acquisition de paramètres de dispositif de réseau configuré pour acquérir des informations associées du dispositif de réseau local comportant des informations d'accès, de suppression, de statut de connexion et/ou de statut de fonctionnement du dispositif de réseau local ; et
un module de traitement de paramètres de dispositif de réseau configuré pour déterminer une structure topologique et des informations de configuration du réseau local en fonction des informations associées du dispositif de réseau local acquises par le module d'acquisition de paramètres de dispositif de réseau.

9. Système de gestion de dispositif de réseau local, comprenant :
une passerelle locale selon l'une des revendications 6 à 8 ; et
un serveur de gestion à distance, configuré pour recevoir les informations identifiables du dispositif de réseau local, générer l'instruction de configuration pour gérer le dispositif de réseau local en fonction des informations identifiables du dispositif de réseau et transmettre l'instruction de configuration à la passerelle locale.
